# EUROPEAN PATENT APPLICATION

(11) **EP 0 586 953 A2**
(43) Date of publication of application: **16.03.1994**
(21) Application number: 93113368.0
(22) Date of filing: 20.08.1993
(51) Int. Cl.: H04M 3/50, H04L 12/58

(54) **Techniques for producing voice mail messages from various text inputs**

(30) Priority: 11.09.1992 US 943802
(71) Applicant: SIEMENS ROLM COMMUNICATIONS INC., Santa Clara, CA 95054 (US)
(72) Inventor: Iglehart, David, Austin TX 78704 (US); Ford, Gordon D., Round Rock, TX 78681 (US); Lester, Leland, Austin TX 78748 (US)
(74) Representative: Fuchs, Franz-Josef, Dr.-Ing.

(57) **Abstract**

Method and apparatus are disclosed for producing voicemail (verbal) messages from various text and voice input messages destined for a recipient. Digital text image input signals from, for example, document scans or facsimile devices are converted into ASCII text input signals and chronologically merged with ASCII text input signals received from, for example, E-Mail messages or personal computer files or displays. Each of the ASCII text input signals is converted into a voice message signal and stored chronologically with other verbally-converted text messages and direct voice input messages in a personal voicemail mailbox associated with the recipient. Each of the verbally-converted text and direct voice input messages stored in the personal voicemail mailbox includes a verbal indication of a time of arrival and a source of the message. The recipient is able to access the personal voicemail mailbox and receive the stored verbally-converted text and direct voice input messages in verbal form in the chronological order received.

## Description

### Field of the Invention

The present invention relates Voice Mail systems, and more particularly, to Voice Mail systems for producing Voice Mail messages from multiple different text input sources and voice sources.

### Background of the Invention

In recent years communication system have added many new services for consumer use. For example, Voice Mail systems are used to provide a voice-messaging service to a called party when the called party is unavailable. More particularly, leaving a voice message for a called party is in widespread use in the case of a non-completed telephone call (e.g., where the called party is either busy of otherwise unavailable). Voice messages are more efficient than telephone conversations where participation of the two parties to a call is not required to transfer simple information.
Voice messaging can be considered a replacement for either a human attendant who would otherwise be required to transcribe the message, or for a simple analog recording device (answering machine) that is connected to a called telephone. In this regard see, for example, the book "A Practical Guide to Voice Mail" by Martin F. Parker, Osborne McGraw-Hill, 1987 at pages 2-20 and 198-199; and the article entitled "Voice Mail and Competing Services" by Dr. I. Gitman in Computer Message Systems, edited by R. P. Uhlig, Proceedings of the IFIP TC-6 International Symposium on Computer Message systems, Washington D.C., 5-7 September 1985, North Holland Publishing Co., at pages 405-410. As outlined in the article by Dr. I. Gitman, competing services are the regular mail, express mail, mailgrams, facsimile, or telephony (where Voice Mail is used when the called party is busy or not available). Major improvements in communication provided by Voice Mail come from new efficiency in the flow of information between business people.

U.S. Patent No. 4,790,003 (G. Kepley et al.), issued on December 6, 1988, discloses a message service system network that interconnects a plurality of voice mail message service systems and provides for the transferring of voice mail message between the voice mail message service systems. The Voice mail message transfer is performed as a computer-to-computer data file transfer over high speed data lines. The data file consists of a digitally encoded and compressed voice mail message to which is appended the message sender's name and telephone number as well as the message recipients telephone number.

U.S. Patent No. 4,805,207 (A. McNutt et al.), issued on February 14, 1989, discloses a message taking and retrieval system which is used with a PBX, a central computer, and operator stations for taking telephone messages. Each operator station includes a personal computer (PC) which is connected via an adapter to a telephone line from the PBX, and by a data link to the central computer. When a call is forwarded to an operator station, the central computer provides information about the caller to the operator station PC which displays this information at the station display. Messages are typed in by the operator using the PC keyboard, and are forwarded by the PC to the central computer where the message is stored as ASCII-coded data. A person retrieves messages from the central computer in either one of two different ways. At a computer retrieval station, the person can view messages in a conventional manner after typing in identification information. From a telephone, the person can review messages which are converted from the ASCII-coded data into the English language by the retrieval system.

U.S. Patent No. 5,003,574 (D. Denq et al.), issued on March 26, 1991, discloses a voice capture system for use with a telephone switching system, and transcribing terminals for recording calling party generated information in predefined formats. The system digitizes and records messages from calling parties of the switching system, and records recognized terminology within the calling parties' voice messages as file records. The transcribing terminals are enabled to display the file record terminology in predefined formats and the recorded messages are transmitted as audio messages via a telephone to operators. The operators then enter information contained within the recorded messages to complete the predefined format which are subsequently recorded in the voice capture system.

Various technique are known in the prior art to provide message services to a person in a Voice Mail system. In a first technique, someone, often a second party such as a secretary, has to read information received through personal computer displays, files, or printed hard copy and physically record such information for distribution in Voice Mail messages. Such first technique has disadvantages in that it is labor intensive, introduces the possibility of errors when the text is read and recorded vocally, and often can compromise confidentiality when a second party does the recording.

In a second technique, when a person wants to distribute original information through both text and voice methods, that person has to generate the information in two different formats. Such second technique has disadvantages in that it is labor intensive and introduces the possibility of errors when the text is recorded in two formats. Still further, a person who creates information in electronic mail (E-Mail), or in hard copy, simply might not bother to duplicate it in Voice Mail and thus limits distribution.

In a third technique, a person who received messages from multiple sources (e.g., electronic mail, PC displays and files, facsimiles, printed hard copy, and Voice Mail) has to examine each separate source continually to ensure timely receipt of all messages. This third technique has the disadvantages in that it is time consuming, confusing and inefficient. More particularly, persons with many messages coming from many sources cannot easily continue to review all of the sources, cannot easily determine which messages are most current, and cannot be sure that they have received all messages from all sources. Still further, persons who receive messages from multiple sources may have to deal with multiple inconvenient security systems such as passwords, locked facsimile rooms, and different interfaces which are not always intuitive.

It is desirable to provide a messaging system which can receive messages for a person from multiple sources and permit that person to employ a single, easy-to-use interface, requiring only one security system (e.g., a password) to review all messages from the multiple sources.

### Summary of the Invention

The present invention is directed to a technique for producing Voice Mail messages from multiple different sources such as normal verbal Voice Mail messages and text inputs from, for example, electronic mail, personal computer displays and files, facsimiles, and printed hard copy. Viewed from one aspect, the present invention is directed to a method of storing voicemail messages from multiple text and voice inputs destined for a recipient. In a first step, a determination is made of whether a text input message signal is from a group consisting of a first form including an ASCII text input message signal, and a second form including a digital image input message signal. In a second step, the text input message signal determined in the first step to be in the second form is converted into an ASCII text output message signal. In a third step, the ASCII text input message signal determined in the first step to be a text input message signal in the first form, or the ASCII text output message signal produced in the second step, is converted into a voice output message signal. In a fourth step, the voice output message signal produced in the third step is stored in a personal voicemail mailbox associated with the recipient in a chronological order with other received text and voice input message signals.

Viewed from another aspect, the present invention is directed to apparatus for storing voicemail messages from multiple text and voice inputs destined for a recipient. The apparatus comprises receiving and conversion means, text-to-voice converting means, and memory means. The receiving and conversion means receives a text input message signal from a group consisting of a first form including an ASCII text input message signal, and a second form including a digital image input message signal. The receiving and conversion means then converts the text input message signal in the second form from a digital image input message signal into an ASCII text output message signal. The text-to-voice converting means converts the ASCII text input message signal of the text input message signal in the first form, or the ASCII text output message signal produced in the conversion of the text input message signal in the second form, into a voice output message signal into a voice output message signal. The memory means stores the voice output message signal produced by the text-to-voice converting means in a personal voicemail mailbox associated with the recipient in a chronological order with other received text and voice input message signals.

The invention will be better understood from the following more detailed description taken with the accompanying drawings and claims.

### Brief Description of the Drawings

FIG. 1 is a block diagram of apparatus for producing Voice Mail messages from text and verbal inputs in accordance with the present invention; and
FIG. 2 is a flowchart of a sequence of steps used for producing Voice Mail messages from text and voice inputs in accordance with the present invention.

### Detailed Description

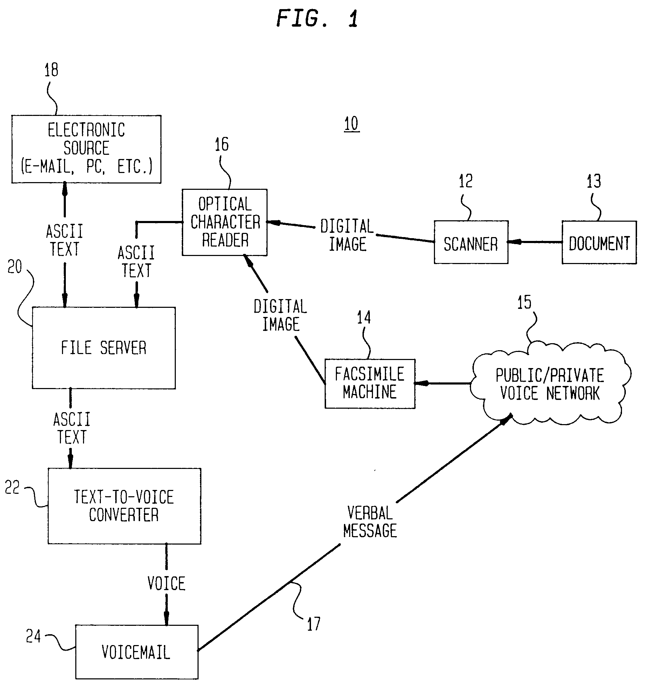

Referring now to FIG. 1, there is shown a block diagram of a personal messaging system 10 for producing Voice Mail messages from text and verbal inputs in accordance with the present invention. The personal messaging system 10 comprises a scanner 12 which scans a printed document 13, a facsimile machine 14 which receives facsimile messages from a public/private voice network 15, an optical character reader 16, an electronic source (E-Mail, PC, etc.) 18, a file server 20, a text-to-voice converter 22, and a Voice Mail apparatus (Voicemail) 24. The scanner 12 scans printed hard copy (text) on the document 13 and converts the scanned printed hard copy into digital image output signals representative of an image of the scanned printed hard copy on the document 13. The facsimile machine 14 receives facsimile messages from the public/private voice network 15 and generates digital image output signals representative of a graphic image of the received facsimile message. Preferably, the facsimile machine 14 is a facsimile card that is placed in a personal computer at a workstation having the personal messaging system 10, or a facsimile machine which has an output port for providing a digital image output signal. The digital image output signals from the scanner 12 and the facsimile machine 14 are received by the optical character reader (OCR) 16 which converts the received digital image signals into ASCII text output signals. The OCR 16 can comprise a personal computer operating on OCR software which accommodates concurrent digital image input signals by storing one of the digital image input signals on a disk while operating on the other digital image input signal in real time. Alternatively, the OCR 16 can store all digital image input signals and then process each of the digital image input signals in sequence as time permits (not in real time).

The electronic source 18 provides ASCII text inputs of electronic mail (E-Mail), files and displays of a personal computer (PC), and other such ASCII text input signals, and generates representative ASCII text output signals. The ASCII text output signals from the optical character reader 16 and the electronic source 18 are provided as inputs to the file server 20. The file server 20 functions to continually poll the optical character reader 16 and the electronic source 18 for a new ASCII text message. When one or more ASCII text messages are available from the optical character reader 16 and the electronic source 18, the file server 20 accesses and stores each of the ASCII text messages and then outputs such stored ASCII text messages in sequence to the Text-to-Voice converter 22. The Text-to-Voice converter 22 transforms the information of the ASCII text messages into voice signals that are transmitted to the Voicemail apparatus 24. The Voicemail apparatus 24 merges the voice messages from the Text-to-Voice converter 22 with any voice messages received directly from the public/private voice network 15. These voice messages are arranged in the Voicemail apparatus 24 according to time of arrival (chronologically), and identified according to a time of arrival, and the caller and/or the message source transmitted with the message.

In the preferred embodiment, the facsimile machine (facsimile card) 14, the optical character reader 16, the file server 20, the text-to-voice converter, and the Voicemail apparatus 24 are all parts (hardware and/or software) located within a person's personal computer or workstation associated with a particular telephone number. Therefore, when data from the scanner 12, the facsimile machine 14, or the electronic source 18 is directed through a phone line to a person's work station or desktop equipment (associated with a predetermined telephone number), the data is sent to that person's phone number and processed and stored in chronological order into the person's personal mailbox in the Voicemail apparatus 24. Voice (verbal) messages sent over the public/private voice network 15 need not be converted into voice messages, and are delivered directly via path 17 into the person's personal mailbox in the Voicemail apparatus 24. The verbal messages are integrated with the voice messages from the text-to-voice converter 22 according to the time sequence of arrival and verbally identified as to the time of arrival, and the caller and/or the message source.

An advantage of the present invention is that a recipient is provided with a single, easy-to-use interface (the Voicemail arrangement 24), which requires only one security system (e.g., a password) to review messages from many sources. More particularly, a recipient of the personal messaging system 10 can access the voice and verbally converted text messages stored in the Voicemail apparatus 24 by locally accessing the personal computer incorporating the Voicemail apparatus 24. Still further, the recipient of the personal messaging system 10 can remotely access the voice and verbally converted text messages stored in the Voicemail apparatus 24 by calling through the public/private voice network 15 and path 17 into the personal computer and providing a single password.

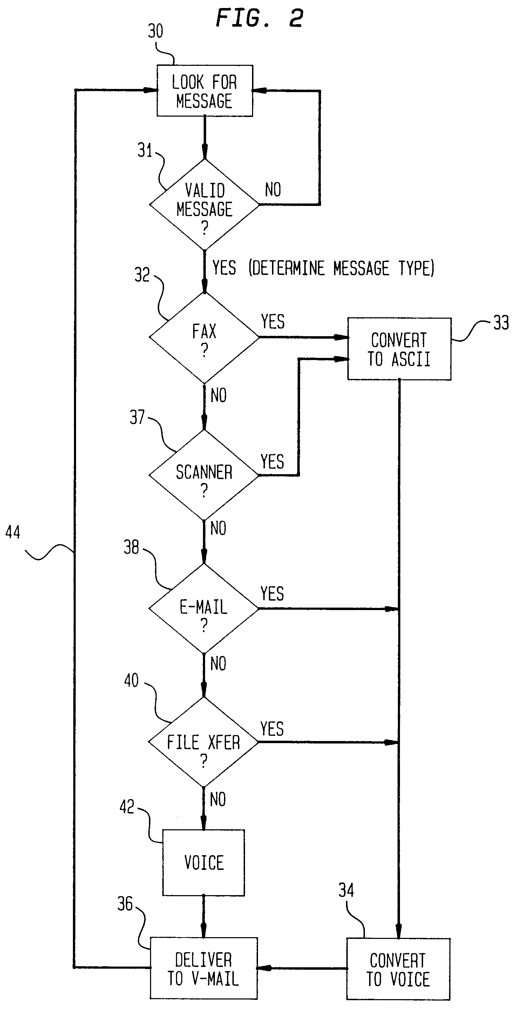

Referring now to FIG. 2, there is shown a flowchart of a sequence of steps used by the personal messaging system 10 of FIG. 1 for producing Voice Mail messages from text and voice inputs in accordance with the present invention. In a first step shown in block 30, the system 10 looks for a message from the scanner 12, the facsimile machine 14, the electronic source 18, or the public/private voice network 15 (all of FIG. 1). If the personal messaging system 10 detects a signal from the scanner 12, the facsimile machine 14, the electronic source 18, or the public/private voice network 15, the sequence proceeds to block 31 where a determination is made whether or not the detected signal is a valid message or, for example, noise or other non-message signal. If the detected signal is not a valid message (a NO decision from block 31), the sequence returns to block 30 to again look for a message from the scanner 12, the facsimile machine 14, the electronic source 18, or the public/private voice network 15. On the other hand, if the received signal is a valid message (a Yes decision from block 31), the sequence proceeds to block 32 where a determination is made of whether the valid message is a digital image message signal from the facsimile machine (FAX) 14 or not.

If the received message is a facsimile message (a YES decision from block 32) from the facsimile machine 14, the sequence proceeds to block 33 where the optical character reader 16 (only shown in FIG. 1) converts the digital image message input signal into an ASCII text output signal. The resultant ASCII text output signal is then transmitted via the file server 20 (only shown in FIG. 1) to the text-to-voice converter 22 (only shown in FIG. 1) for conversion into a voice message as shown in block 34. The voice message produced in block 34 is then delivered to the Voicemail (V-Mail) apparatus 24 (only shown in FIG. 1) as shown in block 36. If the received signal is not a facsimile message (a NO decision from block 32), the sequence proceeds to block 37 where a determination is made of whether the valid message is a digital image message from the scanner 12 or not.

If the received message is a scanner message (a YES decision from block 37) from the scanner 12, the sequence proceeds to block 33 where the optical character reader 16 converts the digital image message input signal to an ASCII text output signal. The resultant ASCII text output signal is then transmitted via the file server 20 to the text-to-voice converter 22 for conversion into a voice message as shown in block 34. The voice message produced in block 34 is then delivered to the Voicemail (V-Mail) apparatus 24 as shown in block 36. If the received signal is not a scanner message (a NO decision from block 37), the sequence proceeds to block 38 to determine if the valid message is an E-Mail message from the electronic source 18 (only shown in FIG. 1) or not.

If the received message is an E-Mail message (a YES decision from block 38) from the electronic source 18, the sequence proceeds to block 34 where the ASCII text E-Mail message signal is converted into a voice message by the text-to-voice converter 22 as shown in block 34. The voice message produced in block 34 is then delivered to the Voicemail (V-Mail) apparatus 24 as shown in block 36. If the received signal is not an E-Mail message (a NO decision from block 38), the sequence proceeds to block 40 to determine if the valid message is an file transfer message from the electronic source 18 or not.

If the received message is a file transfer message (a YES decision from block 40) from the electronic source 18, the sequence proceeds to block 34 where the ASCII text file transfer signal is converted into a voice message by the text-to-voice converter 22 as shown in block 34. The voice message produced in block 34 is then delivered to the Voicemail (V-Mail) apparatus 24 as shown in block 36. If the received signal is not a file transfer message (a NO decision from block 40), the sequence proceeds to block 42 to process the valid message as a voice message received from the public/private voice network 15 via path 17. More particularly, if it has been determined in blocks 32, 37, 38, and 40 that the valid message is not a facsimile message, a scanner message, an E-Mail message, or a file transfer message, respectively, then the only remaining valid message is a voice message. As shown by block 42, the voice message is delivered to the Voicemail apparatus indicated by block 36. Once a valid message has been processed through the sequence indicated by blocks 32, 33, 34, 37, 38, 40, and 42 to block 36, the process repeats itself for a next message as indicated by path 44.

In accordance with the present invention, a technique is provided for recipients to have a Voicemail arrangement which produces messages from various types of voice and text inputs to facilitate communication and distribution of messages to that recipient. More particularly, the present invention has the following advantages over the prior art Voicemail systems. First, the present Voicemail technique reduces the man-hours required to read text messages and then record such messages onto the Voicemail system. Second, the present Voicemail technique reduces the possibility of errors which alter the information during the reading and recording of text messages. Third, the present Voicemail technique makes it possible to distribute information automatically in multiple media environments. Fourth, the present Voicemail technique permits a recipient to check E-Mail and other voice and text messages from an off-site telephone. Fifth, the present Voicemail technique preserves confidentiality, since a second party is not required to provide transcription of text messages. Sixth, the present Voicemail technique provides a recipient with a single, easy-to-use interface (the Voicemail arrangement 24) requiring only one security system (e.g., a password) to review messages chronologically from many sources.

It is to be appreciated and understood that the specific embodiments of the invention described hereinbefore are merely illustrative of the general principles of the invention. Various modifications may be made by those skilled in the art consistent with the principles set forth hereinbefore. For example, the personal messaging system 10 can be contained as part of any private/public voice network 15 (e.g., a Private Branch Exchange) instead of a personal computer located at a workstation. Therefore, the voicemail messages are stored at private/public voice network 15 instead of the person's workstation. The person accesses the Voicemail messages by dialing into his/her telephone number and providing the correct message retrieval code and password.

## Claims

1. A method of storing voicemail messages from multiple text and voice inputs destined for a recipient comprising the steps of:
(a) determining whether a text input message signal is from a group consisting of a first form including an ASCII text input message signal, and a second form including a digital image input message signal;
(b) converting the text input message signal determined in step (a) to be in the second form into an ASCII text output message signal;
(c) converting the ASCII text input message signal determined in step (a) to be a text input message signal in the first form, or the ASCII text output message signal produced in step (b), into a voice output message signal; and
(d) storing the voice output message signal produced in step (c) in a personal voicemail mailbox associated with the recipient in a chronological order with other received text and voice input message signals.

2. The method of claim 1 wherein in performing step (b), converting the digital image input message signal into the ASCII text output message signal using an optical character reader.

3. The method of claim 2 wherein in step (a), receiving the text input message signal in the second form from one of a group consisting of a document scanner, and a facsimile device.

4. The method of claim 1 wherein prior to performing step (c), performing a step of storing in a memory the ASCII text input message signal of the text input message signal in the first form from step (a), or the converted ASCII text output message signal from step (b), with other received text input message signals and output each stored ASCII text message signal in chronological sequence for conversion into the voice output message signal in step (c).

5. The method of claim 1 wherein in performing step (a), obtaining the text input message signal in the first form including the ASCII text input message signal from one of a group consisting of an E-mail message, a personal computer file, and a personal computer display.

6. The method of claim 1 wherein in performing step (d), storing the voice output message signal produced in step (c) in the personal voicemail mailbox associated with the recipient in a chronological order received with other text and voice input message signals, each voice output message signal including a verbal indication of a time of arrival and a source of the message.

7. The method of claim 1 including the further step of (e) accessing the personal voicemail mailbox by the recipient for receiving the text and voice input message signals stored in step (d) in a chronological order.

8. Apparatus for storing voicemail messages from multiple text and voice inputs destined for a recipient comprising:
receiving and conversion means for receiving a text input message signal from a group consisting of a first form including an ASCII text input message signal, and a second form including a digital image input message signal, and converting the text input message signal in the second form from a digital image input message signal into an ASCII text output message signal;
text-to-voice converting means for converting the ASCII text input message signal of the text input message signal in the first form or the ASCII text output message signal produced in the conversion of the text input message signal in the second form into a voice output message signal into a voice output message signal; and
memory means for storing the voice output message signal produced by the text-to-voice converting means in a personal voicemail mailbox associated with the recipient in a chronological order with other received text and voice input message signals.

9. The apparatus of claim 8 wherein the receiving and conversion means comprises an optical character reader for converting the digital image input message signal into an ASCII text output message signal.

10. The apparatus of claim 9 wherein the receiving and conversion means receives the text input in a second form from one of a group consisting of a document scanner, and a facsimile device.

11. The apparatus of claim 8 further comprising means for storing the ASCII text input message signal of the text input in the first form, or the converted ASCII text output message signal from the receiving and conversion means, with other received text inputs and output each stored ASCII text message signal in chronological order for delivery to the text-to-voice converting means.

12. The apparatus of claim 8 wherein the receiving and conversion means receives the text input message signal in the first form including an ASCII text input message signal from one of a group consisting of an E-mail message, a personal computer file, and a personal computer display.

13. The apparatus of claim 8 wherein the memory means stores the voice output message signal produced by the text-to-voice converting means in the personal voicemail mailbox associated with the recipient in a chronological order with other received text and voice input messages, each stored input message including a verbal indication of a time of arrival and a source of the message.

14. The apparatus of claim 8 further comprising means for accessing the personal voicemail mailbox by the recipient for receiving the voice input message signals stored in the memory means in chronological order.
